# EUROPÄISCHE PATENTSCHRIFT

(11) **EP 4 508 406 B1**
(45) Veröffentlichungstag und Bekanntmachung des Hinweises auf die Patenterteilung: **17.12.2025**
(21) Anmeldenummer: 23718631.7
(22) Anmeldetag: 04.04.2023
(51) Int. Cl.: G01M 13/025

(54) **ANTRIEBSEINHEIT FÜR EINEN ANTRIEBSSTRANGPRÜFSTAND ZUM PRÜFEN EINES KRAFTFAHRZEUGANTRIEBSSTRANGS UND ANTRIEBSSTRANGPRÜFSTAND**
DRIVE UNIT FOR A DRIVE TRAIN TEST BENCH FOR TESTING A MOTOR VEHICLE DRIVE TRAIN, AND DRIVE TRAIN TEST BENCH
UNITÉ D'ENTRAÎNEMENT POUR BANC D'ESSAI DE TRAIN D'ENTRAÎNEMENT POUR TESTER UN TRAIN D'ENTRAÎNEMENT DE VÉHICULE À MOTEUR, ET BANC D'ESSAI DE TRAIN D'ENTRAÎNEMENT

(30) Priorität: 11.04.2022 DE 102022203613
(43) Veröffentlichungstag der Anmeldung: 19.02.2025
(73) Patentinhaber: ZF Friedrichshafen AG, 88046 Friedrichshafen (DE)
(72) Erfinder: KRISTL, Roland, 94110 Wegscheid (DE); NODES, Stefanie, 94130 Obernzell (DE)
(74) Vertreter: ZF Friedrichshafen AG
(86) Internationale Anmeldenummer: PCT/EP2023/058840
(87) Internationale Veröffentlichungsnummer: WO 2023/198531

(56) Entgegenhaltungen:
- DE-A1- 3 942 016
- DE-C2- 4 328 537

## Beschreibung

Die Erfindung betrifft eine Antriebseinheit für einen Antriebsstrangprüfstand zum Prüfen eines Kraftfahrzeugantriebsstrangs gemäß dem Oberbegriff von Anspruch 1 sowie einen entsprechenden Antriebsstrangprüfstand.

Getriebeprüfstände sowie Antriebsstrangprüfstände zum Prüfen von Kraftfahrzeuggetrieben bzw. von vollständigen Kraftfahrzeugantriebssträngen sind aus dem Stand der Technik hinlänglich bekannt. Derartige Prüfstände werden beispielsweise zur Qualitätskontrolle verwendet, um Funktionsstörungen in Antriebssträngen frühzeitig durch eine Reihe von Belastungstests zu erkennen. Typische Funktionsstörungen entstehen z.B. durch spielbehaftete Bauteile, wie etwa Zahnräder, Synchronringe, Synchronkörper, Lamellenkupplungsscheiben und Wellen, die ausgelenkt und zu Schwingungen angeregt werden können. Im Rahmen einer derartigen Funktionserprobung werden in der Regel auch das Akustikverhalten und die Schaltqualität geprüft. Darüber hinaus finden derartige Prüfstände aber auch in der Entwicklung und stetigen Verbesserung von Kraftfahrzeugantriebssträngen Verwendung.

In diesem Zusammenhang beschreibt die DE 43 28 537 C2 einen Getriebeprüfstand mit einem ersten, als Antriebsmotor dienenden Servomotor und einem zweiten, als Bremsmotor dienenden Servomotor. Der Antriebsmotor ist über eine Kupplung mit der Antriebswelle eines zu prüfenden Kraftfahrzeuggetriebes verbunden und wird u.a. hinsichtlich seiner Drehzahl über einen PC gesteuert, so dass beliebige Drehzahlverläufe simulierbar sind. Der Bremsmotor ist über eine weitere Kupplung mit einer Abtriebswelle des zu prüfenden Kraftfahrzeuggetriebes verbunden. Auch die Drehzahl des Bremsmotors wird über den PC gesteuert. Bei den vom PC simulierten Drehzahlverläufen handelt es sich um in realen Fahrversuchen gemessene Drehzahlverläufe. Somit kann das Kraftfahrzeuggetriebe gemäß der DE 43 28 537 C2 vor dem Einbau in ein Kraftfahrzeug geprüft werden.

Weiterhin ist aus der DE 10 2016 224 138 A1 eine Antriebseinheit eines Antriebsstrangprüfstands mit einem Elektromotor bekannt, wobei der Elektromotor ein Gehäuse mit einem vorderen und einem hinteren Joch aufweist, deren Jocharme sich jeweils radial-seitlich vom Elektromotor abstrecken. Das vordere Joch ist im Bereich eines vorderen Lagers der Motorwelle angeordnet und das hintere Joch ist im Bereich eines hinteren Lagers der Motorwelle angeordnet. Dadurch kann eine vergleichsweise hohe Steifigkeit und Schwingungsdämpfung gewährleistet werden, so dass die Antriebseinheit hohe Drehzahlen von mehr als 25.000 U/min bereitstellen kann. Somit eignet sich die Antriebseinheit insbesondere zum Prüfen von elektrischen Antriebssträngen.

Aus der DE 39 420 16 A1 ist ein Motorprüfstand mit einer Bremseinrichtung und einem Aufnahmegestell für einen zu prüfenden Motor bekannt. Der Motorprüfstand umfasst weiterhin auch Kupplungsmittel zur Verbindung einer Abtriebswelle des Motors mit einer Eingangswelle der Bremseinrichtung. Die Bremseinrichtung und das Aufnahmegestell sind in einem fixen Abstand zueinander montiert, wobei das Aufnahmegestell einen verschiebbaren Schlitten zur Aufnahme und Befestigung eines zu prüfenden Motors aufweist und wobei die Kupplungsmittel ein Spannfutter mit radial verfahrbaren Spannbacken zur Herstellung einer kraftschlüssigen Verbindung mit der Abtriebswelle oder einem mit der Abtriebswelle drehfest verbundenen Bauteil aufweisen.

Die DE 43 28 537 A1 beschreibt einen Getriebeprüfstand mit einem Antriebsmotor, der mit einer drehsteifen Kupplung mit der Antriebswelle eines Getriebes verbunden ist. Der Getriebeprüfstand umfasst auch einen PC und eine Steuereinheit, wobei der PC und die Steuereinheit zur Drehzahlsteuerung des Antriebsmotors dienen. Der Getriebeprüfstand weist auch einen weiteren Motor auf, der über eine drehsteife Kupplung mit der Abtriebswelle des Getriebes verbunden ist und sowohl als Antriebs- als auch als Bremsmotor einsetzbar ist.

Weiterhin ist es bekannt, dass bei den beschriebenen Antriebsprüfstanden auf der Motorwelle des Antriebsmotors oder an einer geeigneten Stelle auf dem Antriebsstrang eine Bremsscheibe angeordnet werden kann, deren Drehbarkeit mittels eines Bremssattels blockierbar ist. Dadurch vergrößert sich der axial benötigte Bauraum und die Torsionssteifigkeit reduziert sich, so dass unerwünschte Schwingungen auftreten können.

Aus der DE 10 2020 203 071 A1 ist schließlich ein Antriebsprüfstand für elektrische Kraftfahrzeugantriebe bekannt, umfassend einen Prüfstands-Elektromotor, dessen Motorwelle unmittelbar oder über einen Antriebsstrang mit einer Ausgangswelle des zu prüfenden elektrischen Kraftfahrzeugantriebs kuppelbar ist. An der Motorwelle oder in dem Antriebsstrang ist ein Drehmomentsensor angeordnet und die Motorwelle oder der Antriebsstrang ist mittels einer Arretiereinrichtung drehfest arretierbar. Entweder die Motorwelle des Prüfstands-Elektromotors oder der mit der Motorwelle des Prüfstands-Elektromotors koaxial verbundene Antriebsstrang weist eine Klemmanordnung mit einer konzentrisch zur Drehachse der Motorwelle oder zum Antriebsstrang radial umlaufenden Radialklemmfläche auf, die von einem Klemmring umschlossen ist. In einer Lösestellung besteht zwischen dem Klemmring und der Radialklemmfläche ein Ringspalt. In einer Arretierstellung hingegen klemmt der Klemmring die Radialklemmfläche drehfest.

Die bekannten Kraftfahrzeugprüfstände sind jedoch insofern nachteilbehaftet, als dass diese entweder zeitaufwändig manuell umgerüstet werden müssen, wenn statt einer Antriebsstrangprüfung unter Drehzahl eine sog. Stall Torque-Prüfung des Antriebsstrangs erfolgen soll, bei der lediglich ein maximales Drehmoment ohne Drehzahl aufgebracht wird, oder wenn diese in der Lösestellung nur einen vergleichsweise geringen Luftspalt von deutlich weniger als 1 mm aufweisen, so dass Messungen unter Drehzahl nachteilig beeinflusst werden können.

Es ist eine Aufgabe der vorliegenden Erfindung, eine verbesserte Antriebseinheit für einen Antriebsstrangprüfstand zum Prüfen eines Kraftfahrzeugantriebsstrangs vorzuschlagen.

Diese Aufgabe wird erfindungsgemäß durch die Antriebseinheit für einen Antriebsstrangprüfstand zum Prüfen eines Kraftfahrzeugantriebsstrangs gemäß Anspruch 1 gelöst. Vorteilhafte Ausgestaltungen ergeben sich aus den Unteransprüchen.

Die Erfindung betrifft eine Antriebseinheit für einen Antriebsstrangprüfstand zum Prüfen eines Kraftfahrzeugantriebsstrangs, umfassend ein Rahmengestell, einen Elektromotor mit einer Motorwelle, eine Kupplung und eine Abtriebswelle, wobei der Elektromotor am Rahmengestell angeordnet ist, wobei die Abtriebswelle in einer Lagerung des Rahmengestells drehbar gehalten ist und wobei die Motorwelle mit der Abtriebswelle über die Kupplung drehfest verbindbar ist. Die erfindungsgemäße Antriebseinheit zeichnet sich dadurch aus, dass die Abtriebseinheit weiterhin eine Bremse umfasst, deren erster Reibpartner eine radiale Außenseite der Kupplung ist und deren zweiter Reibpartner mindestens ein Bremsklotz ist.

Die Erfindung beschreibt also eine Antriebseinheit, die dazu ausgebildet ist, als Bestandteil eines Antriebsstrangprüfstands, nämlich als dessen Antriebseinheit, verwendet zu werden, wobei der Antriebsstrangprüfstand wiederum dazu ausgebildet ist, einen Kraftfahrzeugantriebsstrang zu prüfen. Der Antriebsstrangprüfstand ist dabei nicht nur in der Lage, vollständige Kraftfahrzeugantriebsstränge zu prüfen, sondern insbesondere auch einzelne oder mehrere zu einem Modul zusammengefasste Bestandteile des Kraftfahrzeugantriebsstrangs zu prüfen. Der Kraftfahrzeugantriebsstrang bzw. der oder die Bestandteile des Kraftfahrzeugantriebsstrangs stellen somit den zu prüfenden Prüfling dar.

Bei dem Kraftfahrzeugantriebsstrang kann es sich gleichermaßen um ein elektromotorischen Kraftfahrzeugantriebsstrang handeln wie auch um einen konventionellen Kraftfahrzeugantriebsstrang.

Insbesondere handelt es sich bei dem Prüfling aber um einen elektrischen Antriebsmotor eines elektromotorischen Kraftfahrzeugantriebsstrangs oder um ein elektromotorisch angetriebenes Achsmodul, welches einen elektrischen Antriebsmotor, ein Getriebe und zwei Radwellen umfasst. In letzterem Falle können zwei erfindungsgemäße Antriebseinheiten verwendet werden, um für jede der zwei Radwellen eine Antriebseinheit bereitstellen zu können.

Die Antriebseinheit umfasst zunächst ein Rahmengestell, das vorteilhaft aus einem besonders steifen Material wie beispielsweise einem Mineralguss besteht, insbesondere mit einer metallischen Skelettstruktur.

Das Rahmengestell weist bevorzugt eine Aufnahme für den Elektromotor auf, so dass dieser am Rahmengestell angeordnet werden kann, insbesondere eine besonders feste und steife Aufnahme, beispielsweise über vergleichsweise große Anlageflächen am Rahmengestell für den Elektromotor.

Weiterhin weist das Rahmengestell auch eine Lagerung für die Abtriebswelle sowie insbesondere auch für die Motorwelle auf. Somit sind auch die Abtriebswelle und insbesondere auch die Motorwelle schwingungsarm und steif durch das Rahmengestell gehalten.

Der Elektromotor bringt die mechanische Leistung in Form eines Drehmoments und einer Drehzahl auf, um den Prüfling unter Drehzahl zu prüfen. Elektromotoren sind dabei vergleichsweise kompaktbauend, haben insbesondere im Vergleich zu Verbrennungsmotoren ein breites Drehzahlspektrum und weisen vorteilhaft über einen weiten Drehzahlbereich das maximale Drehmoment auf.

Vorteilhaft ist dem Elektromotor ein Inverter zugeordnet. Der Inverter ist beispielsweise dreiphasig ausgebildet.

Der Elektromotor umfasst seinerseits ein Motorgehäuse, welches den Elektromotor einhaust. Das Motorgehäuse ist beispielsweise zylinderförmig ausgebildet.

Das Motorgehäuse kann auch eine Wasserkühlung aufweisen.

Über die Motorwelle kann der Elektromotor dann die mechanische Leistung in Form einer Drehzahl und eines Drehmoments abgeben.

Über die Kupplung ist die Motorwelle mit der Abtriebswelle drehfest verbindbar.

Die Kupplung erlaubt es dementsprechend auch, die Motorwelle von der Abtriebswelle zu lösen, so dass beispielsweise der Elektromotor oder die Abtriebswelle jeweils einzeln vom Rahmengestell entfernt und ausgetauscht werden können.

Die Abtriebswelle weist an ihrem dem Elektromotor abgewandten und dem Prüfling zugewandten Axialende vorteilhaft eine Anbindung beispielsweise in Form eines Flanschs oder einer formschlüssigen Kupplung auf, um eine drehfeste Verbindung zum Prüfling herzustellen.

Erfindungsgemäß ist es nun vorgesehen, dass die Abtriebseinheit weiterhin eine Bremse umfasst, deren erster Reibpartner eine radiale Außenseite der Kupplung ist und deren zweiter Reibpartner mindestens ein Bremsklotz ist. Daraus ergibt sich zunächst der Vorteil, dass ohne Rüstaufwand und damit verbundene Rüstzeiten - in denen die Antriebseinheit naturgemäß nicht zum Prüfen von Prüflingen zur Verfügung steht - reine Drehmomentmessungen ohne Drehzahl durchgeführt werden können. Weiterhin ergibt sich der Vorteil, dass der mindestens eine Bremsklotz im gelösten Zustand soweit von der Außenseite der Kupplung entfernt werden kann, dass sich keine Beeinflussungen des Drehverhaltens bei Messungen unter Drehzahl ergeben. Beispielsweise kann der mindestens eine Bremsklotz über eine entsprechende Mechanik an die Außenseite der Kupplung angelegt und von dieser entfernt werden.

Gemäß einer bevorzugten Ausführungsform der Erfindung ist es vorgesehen, dass die Bremse zwei zweite Reibpartner aufweist, welche über einen Bremsrahmen schwimmend an der Außenseite der Kupplung gehalten sind. Dadurch kann die Außenseite der Kupplung von beispielsweise zwei gegenüberliegenden Seiten geklemmt werden, wodurch sich die aufbringbare Bremskraft vergrößert. Indem die zwei zweiten Reibpartner schwimmend gelagert sind, muss zudem keine aufwändige Justage bzw. Positionierung der zweiten Reibpartner im betätigten bzw. im gelösten Zustand gegen den ersten Reibpartner erfolgen.

Bei den zwei zweiten Reibpartnern handelt es sich vorteilhaft um zwei Bremsklötze.

Gemäß einer besonders bevorzugten Ausführungsform der Erfindung ist es vorgesehen, dass der Bremsrahmen schwimmend an einem Lagerschild des Elektromotors angeordnet ist. Indem der Bremsrahmen schwimmend gehalten ist, müssen nicht die zweiten Reibpartner jeweils einzeln schwimmend am Bremsrahmen angeordnet werden, vielmehr können sie über den schwimmend gelagerten Bremsrahmen ebenfalls schwimmend angeordnet sein. Der Bremsrahmen ist dabei vorteilhaft ein metallischer Rahmen mit einer entsprechenden Mechanik, welche eine gleichzeitige Betätigung der zwei zweiten Reibpartner ermöglicht.

Indem der Bremsrahmen am Lagerschild des Elektromotors angeordnet ist, ist er einerseits fest und stabil am Elektromotor gehalten und andererseits bereits im Bereich der Motorwelle angeordnet und somit auch nahe an der Kupplung, deren Außenseite den ersten Reibpartner darstellt.

Gemäß einer weiteren besonders bevorzugten Ausführungsform der Erfindung ist es vorgesehen, dass der Bremsrahmen die Kupplung radial zumindest teilweise umgreift. Das bedeutet, dass der Bremsrahmen radial um die Kupplung herum angeordnet ist und insbesondere keinen axialen Bauraum benötigt. Eine axiale Verlängerung ist in der Regel nachteilig, weil dadurch ungewollte Elastizitäten in den Antriebsstrang eingebracht werden, die zu Schwingungen führen können, welche wiederum die durchgeführten Messungen und Prüfungen nachteilig beeinflussen. Da der Bremsrahmen zudem nicht mit der Kupplung mitdreht, entstehen auch keine Unwuchten bzw. Schwingungen durch die Masse des Bremsrahmens und der zweiten Reibpartner.

Gemäß einer weiteren bevorzugten Ausführungsform der Erfindung ist es vorgesehen, dass die Bremse hydraulisch betätigbar ist. Beispielsweise kann die Bremse dazu ein Hydraulikreservoir, einen Hydraulikzylinder und einen im Hydraulikzylinder angeordneten Kolben umfassen, welcher bei einer entsprechenden Beaufschlagung mit hydraulischem Druck im Hydraulikzylinder die Bremse betätigt. Im Rahmen der Betätigung werden die Bremsklötze beispielsweise entlang einer Linearführung an den Außenumfang der Kupplung geführt und angepresst, so dass eine entsprechend starke Haftreibung erzeugt wird, um eine drehfeste Verbindung herzustellen.

Gemäß einer weiteren bevorzugten Ausführungsform der Erfindung ist es vorgesehen, dass die Antriebseinheit weiterhin einen Drehmomentmessflansch umfasst. Der Drehmomentmessflansch ist dabei im Antriebsstrang angeordnet, vorteilhaft im Bereich zwischen der Kupplung und dem Prüfling. Sämtliche übertragenen Drehmomente werden sonst über den Drehmomentmessflansch geführt. Somit kann das zwischen der Kupplung bzw. dem Elektromotor und dem Prüfling wirkende Drehmoment jederzeit zuverlässig erfasst werden.

Die Drehzahl des Elektromotors wird vorteilhaft über dessen Ansteuerungselektronik, insbesondere den dreiphasigen Inverter, erfasst. Aus der Drehzahl und dem Drehmoment kann dann beispielsweise die Leistung bestimmt werden.

Gemäß einer weiteren bevorzugten Ausführungsform der Erfindung ist es vorgesehen, dass die Kupplung als Flanschverbindung ausgebildet ist. Eine Flanschverbindung erlaubt eine zuverlässige Übertragung auch hoher und sehr hoher Drehmomente. Zudem ist eine Flanschverbindung vergleichsweise einfach lösbar, so dass die Abtriebswelle und der Elektromotor voneinander gelöst und beispielsweise ausgetauscht werden können.

Gemäß einer weiteren bevorzugten Ausführungsform der Erfindung ist es vorgesehen, dass der Elektromotor als dreiphasiger Asynchronmotor ausgebildet ist. Asynchronmotoren eignen sich in der Regel sehr gut zum Betrieb bei hohen Drehzahlen, wie sie insbesondere auch elektromotorische Kraftfahrzeugantriebsstränge aufweisen.

Die Erfindung betrifft weiterhin einen Antriebsstrangprüfstand, umfassend mindestens eine erfindungsgemäße Antriebseinheit. Daraus ergeben sich die bereits in Zusammenhang mit der erfindungsgemäßen Antriebseinheit genannten Vorteile auch für den erfindungsgemäßen Antriebsstrangprüfstand.

Der Antriebsstrangprüfstand umfasst vorteilhaft für jede Abtriebswelle des Prüflings eine Antriebseinheit. Weiterhin umfasst der Antriebsstrangprüfstand vorteilhaft auch eine Prüflingsaufnahme, an welcher der Antriebsstrangprüfstand möglichst fest und steif angeordnet werden kann.

Nachfolgend wird die Erfindung anhand von in den Figuren dargestellten Ausführungsformen beispielhaft erläutert.

Es zeigt:

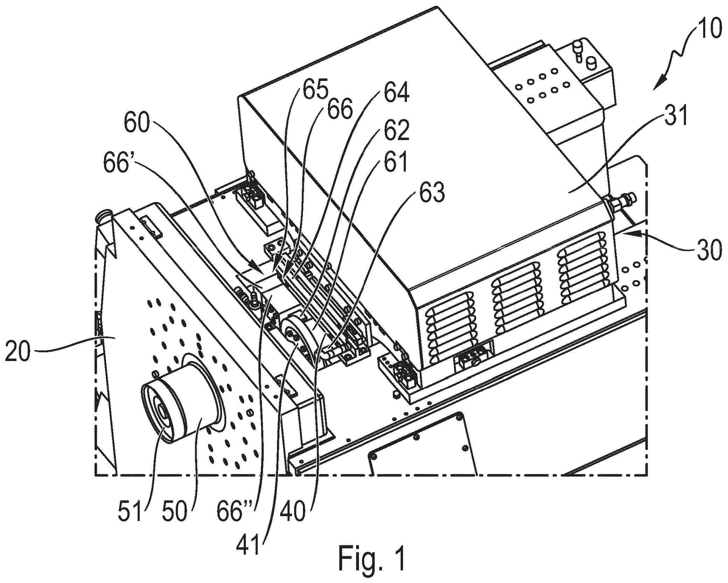

- Fig. 1: beispielhaft und schematisch eine mögliche Ausbildungsform einer erfindungsgemäßen Antriebseinheit.

Gleiche Gegenstände, Funktionseinheiten und vergleichbare Komponenten sind figurenübergreifend mit den gleichen Bezugszeichen bezeichnet. Diese Gegenstände, Funktionseinheiten und vergleichbaren Komponenten sind hinsichtlich ihrer technischen Merkmale identisch ausgeführt, sofern sich aus der Beschreibung nicht explizit oder implizit etwas anderes ergibt.

Fig. 1 zeigt beispielhaft und schematisch eine mögliche Ausbildungsform einer erfindungsgemäßen Antriebseinheit 10. Die Antriebseinheit 10 umfasst ein Rahmengestell 20, einen Elektromotor 30 (verdeckt in der Darstellung der Fig. 1), eine Kupplung 40, eine Abtriebswelle 50 und eine Bremse 60.

Das Rahmengestell 20 besteht beispielsgemäß aus einem Mineralguss, in welchem eine metallische Skelettstruktur vergossen ist. Dadurch ist das Rahmengestell 20 vergleichsweise steif und verhindert wirkungsvoll das Auftreten von Schwingungen.

Der Elektromotor 30 ist beispielsgemäß als dreiphasiger Asynchronmotor 30 ausgebildet und zwischen zwei seitlichen Backen des Rahmengestells angeordnet. Dem Elektromotor 30 ist ein Klemmenkasten 31 zugeordnet, welcher den Inverter zur Ansteuerung des Elektromotors 30 enthält sowie die elektrischen Kabel zur Stromversorgung des Elektromotors 30 aufnimmt.

Eine Ausgangswelle (verdeckt in der Darstellung der Fig. 1) des Elektromotors 30 ist über die Kupplung 40 mit der Abtriebswelle 50 verbunden. Die Abtriebswelle 50 ist drehbar im Rahmengestell 20 gelagert und weist an ihrem dem Prüfling (nicht dargestellt in Fig. 1) zugewandten Axialende eine Flanschverbindung 51 auf.

Weiterhin umfasst die Antriebseinheit 10 einen Drehmomentmessflansch 41, der trieblich zwischen der Kupplung 40 und der Abtriebswelle 50 angeordnet ist. Dadurch werden sämtliche Drehmomente, die von der Abtriebswelle 50 auf die Kupplung 40 übertragen werden oder umgekehrt, über den Drehmomentmessflansch 41 übertragen. Somit können diese Drehmomente vom Drehmomentmessflansch 41 erfasst werden.

Die Bremse 60 umfasst einen ersten Reibpartner 61, welcher durch die radiale Außenseite 62 der Kupplung 40 dargestellt wird. Weiterhin umfasst die Bremse 60 beispielsgemäß zwei zweite Reibpartner 62, 63, welche als sog. Bremsklötze 62, 63 ausgebildet sind.

Die Bremsklötze 62, 63 sind in Richtung der Kupplung 40 betätigbar am Bremsrahmen 64 angeordnet. Der Bremsrahmen 64 seinerseits ist radial um die Kupplung 40 angeordnet und schwimmend an einem Lagerschild des Elektromotors 30 befestigt.

Die Bremse 60 ist beispielsgemäß über ein Zylinder-Kolben-Aggregat 65 hydraulisch betätigbar, so dass die Bremsklötze 62, 63 im betätigten Zustand der Bremse 60 an die radiale Außenseite der Kupplung 40 angepresst werden und diese über Haftreibung drehfest halten. Das Zylinder-Kolben-Aggregat 65 ist in der Darstellung der Fig. 1 eingefasst in ein zweiteiliges Gehäuse 66, dessen erster Teil 66' gegenüber dem Bremsrahmen 64 feststehend ausgebildet ist und dessen zweiter Teil 66" gegenüber dem Rahmengestell 20 und dem ersten Teil 66' mittels des Zylinder-Kolben-Aggregats 65 zur Betätigung der Bremse 60 verstellbar ist.

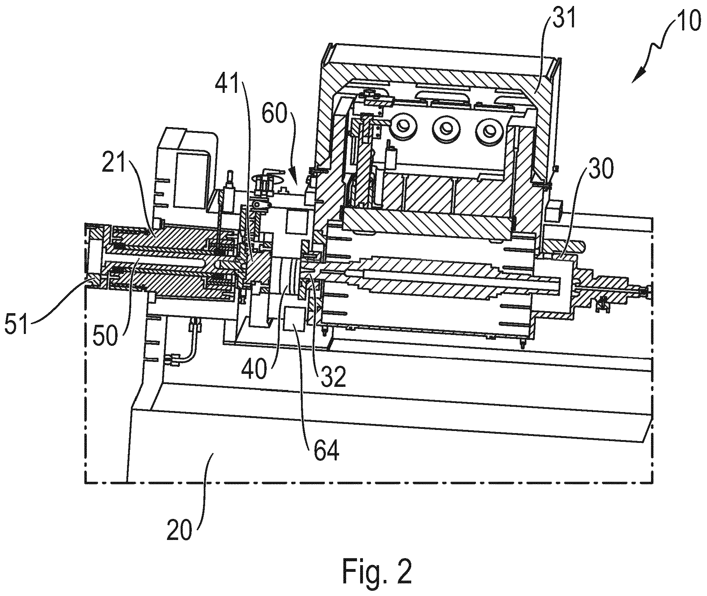

Fig. 2 zeigt die bereits beschriebene Antriebseinheit 10 der Fig. 1 im Schnitt. Zu sehen sind hier wiederum die bereits beschriebenen Bestandteile der Antriebseinheit, nämlich das Rahmengestell 20, der Elektromotor 30, die Kupplung 40, die Abtriebswelle 50 und die Bremse 60.

Oberhalb des Elektromotors 30 ist der Klemmenkasten 31 angeordnet. Die Ausgangswelle 32 des Elektromotors 30 ist über die Kupplung 40 mit der Abtriebswelle 50 verbunden. Die Abtriebswelle 50 ist über die Lagerung 21 drehbar im Rahmengestell 20 gelagert und weist an ihrem dem Prüfling (nicht dargestellt in Fig. 1) zugewandten Axialende eine Flanschverbindung 51 auf.

Der Drehmomentmessflansch 41 ist trieblich zwischen der Kupplung 40 und der Abtriebswelle 50 angeordnet.

Weiterhin zu sehen ist der Bremsrahmen 64, der die Kupplung 40 radial umgibt und schwimmend an einem Lagerschild des Elektromotors angeordnet ist.

### Bezugszeichen

- 10: Antriebseinheit
- 20: Rahmengestell
- 21: Lagerung
- 30: Elektromotor, dreiphasiger Asynchronmotor
- 31: Klemmenkasten
- 32: Ausgangswelle
- 40: Kupplung
- 41: Drehmomentmessflansch
- 50: Abtriebswelle
- 51: Flanschverbindung
- 60: Bremse
- 61: erster Reibpartner, die radiale Außenseite der Kupplung
- 62: zweiter Reibpartner, Bremsklotz
- 63: zweiter Reibpartner, Bremsklotz
- 64: Bremsrahmen
- 65: Zylinder-Kolben-Aggregat
- 66: zweiteiliges Gehäuse
- 66': erster Teil des Gehäuses
- 66": zweiter Teil des Gehäuses

## Patentansprüche

1. Antriebseinheit (10) für einen Antriebsstrangprüfstand zum Prüfen eines Kraftfahrzeugantriebsstrangs, umfassend ein Rahmengestell (20), einen Elektromotor (30) mit einer Motorwelle, eine Kupplung (40) und eine Abtriebswelle (50), wobei der Elektromotor (30) am Rahmengestell (20) angeordnet ist, wobei die Abtriebswelle (50) in einer Lagerung des Rahmengestells (20) drehbar gehalten ist und wobei die Motorwelle mit der Abtriebswelle (50) über die Kupplung (40) drehfest verbindbar ist, **dadurch gekennzeichnet, dass** die Antriebseinheit (10) weiterhin eine Bremse (60) umfasst, deren erster Reibpartner (61) eine radiale Außenseite (61) der Kupplung ist (40) und deren zweiter Reibpartner (62, 63) mindestens ein Bremsklotz (62, 63) ist.

2. Antriebseinheit (10) nach Anspruch 1,
**dadurch gekennzeichnet, dass** die Bremse zwei zweite Reibpartner (62, 63) aufweist, welche über einen Bremsrahmen (64) schwimmend an der Außenseite (61) der Kupplung (40) gehalten sind.

3. Antriebseinheit (10) nach Anspruch 2,
**dadurch gekennzeichnet, dass** der Bremsrahmen (64) schwimmend an einem Lagerschild des Elektromotors (30) angeordnet ist.

4. Antriebseinheit) (10) nach mindestens einem der Ansprüche 2 und 3,
**dadurch gekennzeichnet, dass** der Bremsrahmen (64) die Kupplung (40) radial zumindest teilweise umgreift.

5. Antriebseinheit (10) nach mindestens einem der Ansprüche 1 bis 4
**dadurch gekennzeichnet, dass** die Bremse (60) hydraulisch betätigbar ist.

6. Antriebseinheit (10) nach mindestens einem der Ansprüche 1 bis 5,
**dadurch gekennzeichnet, dass** die Antriebseinheit (10) weiterhin einen Drehmomentmessflansch (41) umfasst.

7. Antriebseinheit (10) nach mindestens einem der Ansprüche 1 bis 6,
**dadurch gekennzeichnet, dass** die Kupplung (40) als Flanschverbindung ausgebildet ist.

8. Antriebseinheit (10) nach mindestens einem der Ansprüche 1 bis 7,
**dadurch gekennzeichnet, dass** der Elektromotor (30) als dreiphasiger Synchronmotor (30) ausgebildet ist.

9. Antriebsstrangprüfstand, umfassend mindestens eine Antriebseinheit (10) nach mindestens einem der Ansprüche 1 bis 8.

## Claims

1. Drive unit (10) for a drive train test bench for testing a motor vehicle drive train, comprising a frame (20), an electric motor (30) having a motor shaft, a clutch (40) and a driven shaft (50), wherein the electric motor (30) is positioned on the frame (20), wherein the driven shaft (50) is rotatably held in a bearing of the frame (20) and wherein the motor shaft is connectable via the clutch (40) to the driven shaft (50) for conjoint rotation,
**characterized in that** the drive unit (10) also comprises a brake (60), the first friction partner (61) of which is a radial outer side (61) of the clutch (40) and the second friction partner (62, 63) of which is at least one brake pad (62, 63).

2. Drive unit (10) according to Claim 1,
**characterized in that** the brake has two second friction partners (62, 63) which are held floatingly via a brake frame (64) on the outer side (61) of the clutch (40).

3. Drive unit (10) according to Claim 2,
**characterized in that** the brake frame (64) is positioned floatingly on a bearing plate of the electric motor (30).

4. Drive unit (10) according to at least one of Claims 2 and 3,
**characterized in that** the brake frame (64) engages at least partially radially around the clutch (40).

5. Drive unit (10) according to at least one of Claims 1 to 4
**characterized in that** the brake (60) is hydraulically actuable.

6. Drive unit (10) according to at least one of Claims 1 to 5,
**characterized in that** the drive unit (10) further comprises a torque measuring flange (41).

7. Drive unit (10) according to at least one of Claims 1 to 6,
**characterized in that** the clutch (40) is configured as a flange connection.

8. Drive unit (10) according to at least one of Claims 1 to 7,
**characterized in that** the electric motor (30) is configured as a three-phase synchronous motor (30).

9. Drive train test bench, comprising at least one drive unit (10) according to at least one of Claims 1 to 8.

## Revendications

1. Unité d'entraînement (10) pour un banc d'essai de chaîne cinématique destiné à tester une chaîne cinématique de véhicule automobile, comprenant un châssis (20), un moteur électrique (30) avec un arbre moteur, un accouplement (40) et un arbre de sortie (50), le moteur électrique (30) étant agencé sur le châssis (20), l'arbre de sortie (50) étant maintenu de manière rotative dans un agencement de palier du châssis (20), et l'arbre moteur étant apte à être relié de manière solidaire en rotation à l'arbre de sortie (50) par l'intermédiaire de l'accouplement (40),
**caractérisé en ce que** l'unité d'entraînement (10) comprend en outre un frein (60) dont le premier élément de friction (61) est un côté extérieur radial (61) de l'accouplement (40) et dont le deuxième élément de friction (62, 63) est au moins un sabot de frein (62, 63).

2. Unité d'entraînement (10) selon la revendication 1, **caractérisée en ce que** le frein présente deux deuxièmes éléments de friction (62, 63) qui sont maintenus flottants sur le côté extérieur (61) de l'accouplement (40) par l'intermédiaire d'un cadre de frein (64).

3. Unité d'entraînement (10) selon la revendication 2, **caractérisée en ce que** le cadre de frein (64) est monté flottant sur un flasque du moteur électrique (30).

4. Unité d'entraînement (10) selon au moins une des revendications 2 et 3,
**caractérisée en ce que** le cadre de frein (64) entoure l'accouplement (40) radialement, au moins partiellement.

5. Unité d'entraînement (10) selon au moins une des revendications 1 à 4,
**caractérisée en ce que** le frein (60) est apte à être actionné hydrauliquement.

6. Unité d'entraînement (10) selon au moins une des revendications 1 à 5,
**caractérisée en ce que** l'unité d'entraînement (10) comprend en outre une bride de mesure de couple (41).

7. Unité d'entraînement (10) selon au moins une des revendications 1 à 6,
**caractérisée en ce que** l'accouplement (40) est réalisé sous la forme d'une liaison par bride.

8. Unité d'entraînement (10) selon au moins une des revendications 1 à 7,
**caractérisée en ce que** le moteur électrique (30) est réalisé sous la forme d'un moteur synchrone triphasé (30).

9. Banc d'essai de chaîne cinématique comprenant au moins une unité d'entraînement (10) selon au moins une des revendications 1 à 8.
